# FASCICULE DE BREVET EUROPEEN

(11) **EP 3 055 531 B1**
(45) Date de publication et mention de la délivrance du brevet: **25.07.2018**
(21) Numéro de dépôt: 14787237.8
(22) Date de dépôt: 03.10.2014
(51) Int. Cl.: F02C 6/20, F02C 9/44

(54) **PROCÉDÉ D'OPTIMISATION DE LA CONSOMMATION SPÉCIFIQUE D'UN HÉLICOPTÈRE BIMOTEUR**
VERFAHREN ZUR OPTIMIERUNG DES SPEZIFISCHEN VERBRAUCHS EINES TWIN-HELIKOPTERS
METHOD FOR OPTIMISING THE SPECIFIC CONSUMPTION OF A TWIN HELICOPTER

(30) Priorité: 09.10.2013 FR 1359766
(43) Date de publication de la demande: 17.08.2016
(73) Titulaire: Safran Helicopter Engines, 64510 Bordes (FR)
(72) Inventeur: MARCONI, Patrick, F-64110 Gelos (FR); THIRIET, Romain, F-64110 Jurancon (FR)
(74) Mandataire: Gevers & Orès
(86) Numéro de dépôt international: PCT/FR2014/052508
(87) Numéro de publication internationale: WO 2015/052413

(56) Documents cités:
- EP-A2- 1 990 519
- EP-A2- 2 602 458
- FR-A1- 2 933 910
- FR-A1- 2 967 133
- US-A- 3 367 107

## Description

### DOMAINE TECHNIQUE

La présente invention concerne un procédé d'optimisation de la consommation spécifique d'un hélicoptère bimoteur, c'est-à-dire d'un hélicoptère équipé de deux turbomoteurs.

### ETAT DE L'ART

De manière générale, en régime de croisière, les turbomoteurs fonctionnent à des niveaux de puissance faibles, en dessous de leur puissance maximale continue, en abrégé PMC. Cette puissance en régime de croisière est égale à environ 50% de leur puissance maximale de décollage, en abrégé PMD (initiales de « Puissance Maximale de Décollage »). Ces faibles niveaux de puissance entraînent une consommation spécifique Cs de l'ordre de 30% supérieure à la Cs à la PMD, et donc une surconsommation en carburant en régime de croisière.

Un hélicoptère est équipé de deux turbomoteurs, chacun conçu de manière surdimensionnée pour pouvoir maintenir l'hélicoptère en vol en cas de panne de l'autre moteur. Dans ces régimes de fonctionnement dédiés à la gestion d'un moteur inopérant, appelés régimes OEI (initiales de « One Engine Inoperative » en terminologie anglaise), le moteur valide fournit une puissance bien au-delà de sa puissance nominale pour permettre à l'hélicoptère de faire face à une situation périlleuse, puis de pouvoir poursuivre son vol. Or chaque régime est défini par un niveau de puissance et une durée maximale d'utilisation. Le débit de carburant injecté dans la chambre de combustion du turbomoteur valide est alors sensiblement augmenté en régime OEI pour fournir ce surcroît de puissance.

Ces turbomoteurs surdimensionnés sont pénalisant en masse et en consommation de carburant. Afin de réduire cette consommation en régime de croisière, il est possible d'arrêter l'un des turbomoteurs. Le moteur actif fonctionne alors à un niveau de puissance plus élevé et donc à un niveau de Cs plus favorable. Cependant, cette pratique est contraire aux règles de certification actuelles, et les turbomoteurs ne sont pas conçus pour garantir un taux de fiabilité de redémarrage compatible avec les normes de sûreté.

Ainsi, la durée de redémarrage du turbomoteur en veille est typiquement de l'ordre de trente secondes. Cette durée peut s'avérer insuffisante selon les conditions de vol, par exemple à faible hauteur de vol avec une défaillance partielle du moteur initialement actif. Si le moteur en veille ne redémarre pas à temps, l'atterrissage avec le moteur en difficulté peut s'avérer critique.

Plus généralement, l'utilisation d'un seul turbomoteur comporte des risques dans toutes les circonstances de vol où il est nécessaire de disposer d'un surcroît de puissance qui impose, en termes de sécurité, de pouvoir disposer des deux turbomoteurs.

La Demanderesse a déjà proposé, dans la demande FR-A1-2 967 133, un procédé d'optimisation de la consommation spécifique d'un hélicoptère équipé de deux turbomoteurs comportant chacun un générateur de gaz muni d'une chambre de combustion. Au moins l'un des turbomoteurs est apte à fonctionner seul en régime de vol stabilisé dit continu, l'autre turbomoteur étant alors en régime dit de super-ralenti à puissance nulle apte à passer en mode d'accélération du générateur de gaz de ce turbomoteur par un entraînement compatible avec un redémarrage en sortie d'urgence.

Le régime de rotation du générateur de gaz du turbomoteur au super-ralenti reste sensiblement inférieur au régime de rotation du générateur de gaz au ralenti usuellement appliqué aux turbomoteurs. Au ralenti, la turbine libre du turbomoteur a sa vitesse de rotation maintenue par le système de régulation du turbomoteur à sa valeur nominale alors qu'en super-ralenti, la turbine libre est désaccouplée du rotor de l'hélicoptère et ne tourne plus à sa vitesse de rotation nominale.

Un régime continu se définit par une non-limitation de durée et ne concerne donc pas les phases transitoires de décollage, de vol stationnaire et d'atterrissage. Par exemple pour une mission de recherche de naufragés, un régime continu se rapporte à la phase de vol de croisière vers la zone de recherche, à la phase de vol à basse altitude dans la zone de recherche au-dessus de l'eau et à la phase de vol en croisière de retour vers la base. Pour des raisons de sécurité, les deux turbomoteurs fonctionnent de préférence ensemble pendant les phases transitoires de décollage, de vol stationnaire et d'atterrissage.

Cependant, une utilisation sélective des turbomoteurs, en fonction des phases et des conditions de vol, autres que les phases transitoires, permet d'obtenir des performances optimisées en termes de consommation Cs avec des puissances proches de la PMD mais inférieures ou égales à la PMC, tout en faisant face aux cas de panne et d'urgence par des moyens de redémarrage sûrs du turbomoteur en super-ralenti.

Une sortie de régime de super-ralenti vers un régime actif de type « bimoteur » est déclenchée de manière dite « normale » lorsqu'un changement de régime de vol impose le passage d'un à deux moteurs, par exemple lorsque l'hélicoptère va passer d'un régime de croisière à un vol stationnaire, ou de manière dite « d'urgence » en cas de panne de moteur ou de conditions de vol soudainement difficiles.

Dans la demande antérieure précitée, le régime de super-ralenti est choisi parmi un régime de maintien en rotation du moteur avec la chambre de combustion allumée, un régime de maintien en rotation du moteur avec la chambre de combustion éteinte et un régime de rotation nulle du moteur avec la chambre de combustion éteinte.

Lorsque la chambre de combustion est éteinte, celle-ci n'est pas alimentée en carburant. La consommation en carburant d'une turbomachine en régime de super-ralenti de ce type peut donc être sensiblement nulle. La rotation de l'arbre du générateur est assurée par des moyens d'entraînement.

La présente invention propose un perfectionnement dans le cas où le générateur de gaz du turbomoteur en régime de super-ralenti a sa chambre de combustion allumée.

En effet, la Demanderesse a constaté que la température de fonctionnement et la consommation en carburant du générateur de gaz sont particulièrement importantes en régime de super-ralenti chambre allumée. Le maintien en rotation de l'arbre du générateur de gaz est assuré uniquement par l'alimentation en carburant de la chambre de combustion de ce générateur, qui est ainsi allumée et alimente la turbine haute pression (HP) du générateur. Cette turbine fournit un travail mécanique relativement important pour entraîner le compresseur, ce qui se traduit par une température d'entrée de celle-ci et une température dans la chambre relativement importantes. La température de fonctionnement en super-ralenti est proche de celle au décollage. Comme le débit de gaz circulant dans le générateur est plus faible en super-ralenti, le générateur est relativement plus chaud qu'au décollage, ce qui peut poser des problèmes de refroidissement et donc de durée de vie des composants.

La présente invention apporte une solution simple, efficace et économique à ce problème.

### EXPOSE DE L'INVENTION

L'invention propose à cet effet un procédé d'optimisation de la consommation spécifique d'un hélicoptère équipé de deux turbomoteurs comportant chacun un générateur de gaz muni d'une chambre de combustion, chacun de ces turbomoteurs étant apte à fonctionner seul en régime de vol continu, l'autre turbomoteur étant alors en régime dit de super-ralenti à puissance nulle apte à passer en mode d'accélération du générateur de gaz de ce turbomoteur par un entraînement compatible avec un redémarrage en sortie d'urgence, caractérisé en ce que ce régime de super-ralenti est obtenu avec la chambre de combustion du générateur de gaz allumée, et en ce que ce régime de super-ralenti est assisté par un entraînement mécanique en rotation de l'arbre du générateur de gaz à ce régime, de façon à réduire la température de fonctionnement et la consommation de carburant de ce générateur de gaz.

Selon l'invention, ce régime de super-ralenti (régime de rotation non nulle chambre allumée) est assisté en injectant une puissance mécanique sur le générateur de gaz dans le but de significativement réduire la température de fonctionnement et la consommation de carburant à ce régime, ce qui permet notamment de minimiser les rejets d'imbrulés. En effet, l'injection d'une puissance mécanique sur l'arbre du générateur de gaz diminue le travail mécanique que doit fournir la turbine HP pour entraîner le compresseur, ce qui se traduit par une diminution de la température d'entrée de celle-ci et ainsi de toutes les températures observées en aval de la turbine jusqu'à l'échappement qui a un effet bénéfique sur la durée de vie des composants exposés à ces températures, y compris au voisinage immédiat du moteur. Cette diminution de la température conduit aussi à une diminution de la température dans la chambre de combustion et de la consommation de carburant

Le régime de super-ralenti peut correspondre à 10 à 40% environ, du régime nominal du générateur de gaz. Le régime de super-ralenti est donc différent des régimes de ralenti usuels (ralenti vol et ralenti sol) qui correspondent à en général 70 à 80 % du régime nominal du générateur de gaz.

L'assistance du régime de super-ralenti est de préférence continue, c'est-à-dire que l'arbre du générateur de gaz est entraîné en rotation pendant toute la durée du régime de super-ralenti, et ce sans interruption.

L'entraînement mécanique est par exemple réalisé par un moteur électrique, un dispositif d'entraînement mécanique couplé à l'autre générateur de gaz ou au rotor de l'hélicoptère, ou un dispositif d'entraînement mécanique fonctionnant avec une source d'énergie telle qu'une source hydraulique, ou pneumatique. Le moteur électrique peut être un démarreur équipant le générateur de gaz et alimenté par un réseau de bord ou un démarreur/générateur équipant l'autre générateur de gaz. Le dispositif d'entraînement mécanique peut être couplé à une boîte de transfert de puissance, connue sous l'abréviation BTP, ou directement à la turbine libre de l'autre générateur.

### DESCRIPTION DES FIGURES

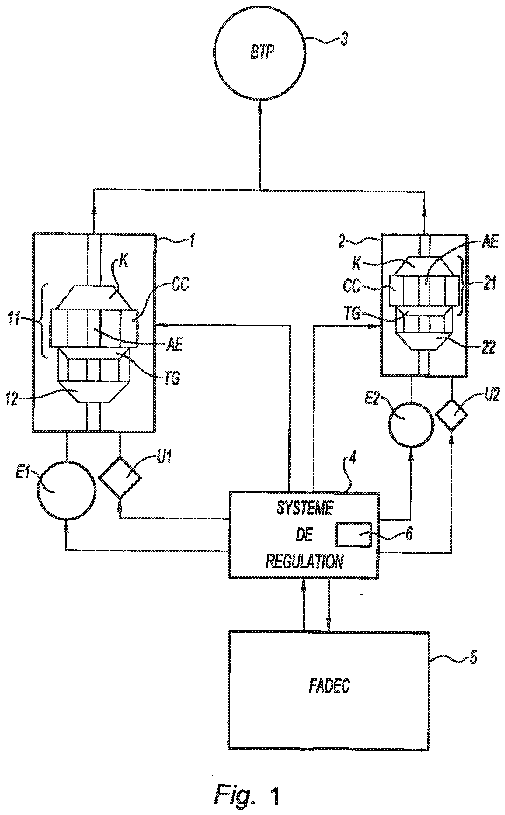

L'invention sera mieux comprise et d'autres détails, caractéristiques et avantages de l'invention apparaîtront à la lecture de la description suivante faite à titre d'exemple non limitatif et en référence à la figure unique qui est un schéma simplifié d'un exemple d'architecture bimoteur pour la mise en oeuvre du procédé selon l'invention.

### DESCRIPTION DETAILLEE

Les termes « moteur » et « turbomoteur » sont synonymes dans le présent texte. Dans le mode de réalisation illustré, les moteurs ont des puissances maximales différenciées. Ce mode permet avantageusement de supprimer les régimes OEI sur le turbomoteur de plus forte puissance, ce qui minimise la différence de masses entre les deux moteurs. Pour simplifier le langage, le moteur le plus puissant ou moteur surdimensionné peut également être désigné par le « gros » moteur et le moteur de plus faible puissance par le « petit » moteur.

La figure illustre schématiquement un exemple d'architecture bimoteur d'hélicoptère qui permet d'optimiser la consommation spécifique Cs.

Chaque turbomoteur 1, 2 comporte classiquement un générateur de gaz 11, 21 et une turbine libre 12, 22 alimentée par le générateur de gaz pour fournir de la puissance. Au décollage et en régime continu, la puissance fournie peut atteindre des valeurs maximales prédéterminées, respectivement PMD et PMC. Un générateur de gaz se compose classiquement de compresseurs d'air « K » en liaison avec une chambre de combustion « CC » du carburant dans l'air comprimé qui délivrent des gaz fournissant de l'énergie cinétique, et de turbines de détente partielle de ces gaz « TG » qui entraînent en rotation les compresseurs via des arbres d'entraînement « AE ». Les gaz entraînent également les turbines libres de transmission de puissance. Dans l'exemple, les turbines libres 12, 22 transmettent la puissance via une BTP 3 qui centralise la fourniture de puissance aux charges et accessoires (prise de mouvement du rotor, pompes, alternateurs, dispositif démarreur/générateur, etc.).

Les puissances maximales PMD et PMC du turbomoteur 1 sont sensiblement supérieures à celles que le turbomoteur 2 est capable de fournir : le turbomoteur 1 est surdimensionné en puissance par rapport au turbomoteur 2. Le rapport d'hétérogénéité entre les deux turbomoteurs, qui correspond au rapport entre la puissance du régime OEI le plus élevé du turbomoteur 2 et la puissance maximale PMD du turbomoteur 1, est égal à 1,3 dans l'exemple.

Alternativement, les deux turbomoteurs 1 et 2 peuvent être identiques et les puissances maximales PMD et PMC de ces turbomoteurs sont alors également identiques.

Chaque turbomoteur 1, 2 est couplé à des moyens d'entraînement E1 et E2 et à des dispositifs d'assistance d'urgence, U1 et U2.

Chaque moyen d'entraînement E1, E2 en rotation du générateur de gaz respectif 11, 21, est ici constitué par un démarreur alimenté respectivement par un dispositif démarreur/générateur équipant l'autre turbomoteur. Et chaque dispositif d'assistance d'urgence U1, U2 comporte avantageusement, dans cet exemple, des bougies à incandescence « glow-plug » comme dispositif d'allumage à effet quasi-instantané, en complément des bougies conventionnelles, et une cartouche de propergol alimentant une micro-turbine annexe comme moyen mécanique d'accélération des générateurs de gaz. Ce dispositif d'allumage complémentaire peut également être utilisé en sortie normale de changement de régime de vol, ou en sortie d'urgence du régime de super-ralenti.

En fonctionnement, ces moyens d'entraînement E1, E2, les dispositifs d'assistance d'urgence U1, U2 et les commandes des turbomoteurs 1 et 2 sont gérés par des moyens d'activation d'un système de régulation 4, sous le contrôle du dispositif de commande numérique général de la motorisation connue sous l'acronyme FADEC 5 (initiales de « Full Authority Digital Engine Control » en terminologie anglaise).

Le système de régulation 4 comprend une mémoire 6 dans laquelle sont enregistrés des modes de gestion propres à différents profils de mission. Le système 4 sélectionne parmi ces modes de gestion ceux qui sont adaptés au profil de la mission en cours, tels que par exemple un mode M1 concernant les phases transitoires, un mode M2 se rapportant aux vols en régime continu -croisière et phase de recherche -, un mode M3 relatif aux pannes de moteur, et un mode M4 de gestion des redémarrages d'urgence des moteurs en régime de super-ralenti.

Lors des phases transitoires (mode M1), tels qu'au décollage, en vol stationnaire et à l'atterrissage, les turbomoteurs 1 et 2 sont tous deux en fonctionnement, de sorte que l'hélicoptère dispose d'une puissance élevée, pouvant aller jusqu'à leur PMD. Les deux moteurs fonctionnent au même niveau de puissance relatif par rapport à leur puissance nominale. Les cas de panne d'un des moteurs sont gérés de manière conventionnelle, par exemple en armant les régimes OEI du « petit » turbomoteur ou du turbomoteur valide dans le cas de la panne de l'autre turbomoteur.

Le mode M3 gère les cas de panne du moteur utilisé en réactivant l'autre moteur par son dispositif d'assistance d'urgence. Par exemple lorsque le turbomoteur surdimensionné 1, utilisé en fonctionnement seul pendant les phases de vol de croisière, tombe en panne, le « petit » moteur 2 est rapidement réactivé via son dispositif d'assistance d'urgence U2. De manière similaire, si le « petit » moteur 2 seul en fonctionnement pendant la phase de recherche tombe en panne, le « gros » moteur 1 est rapidement réactivé via son dispositif d'assistance d'urgence U1. Il en est de même lorsque les moteurs sont identiques en puissance.

Lorsque les conditions de vol deviennent subitement difficiles, un redémarrage rapide du moteur en régime de super-ralenti, par activation de son dispositif d'assistance, peut être opportun pour disposer de la puissance de deux turbomoteurs. Dans l'exemple, ce dispositif est de nature pyrotechnique et se compose d'une cartouche de propergol alimentant une micro-turbine. Ces cas sont gérés par le mode de redémarrage d'urgence M4. Ainsi, que ce soit pendant les phases de vol de croisière ou de recherche, pendant lesquelles un seul turbomoteur 1 ou 2 fonctionne, le fonctionnement de l'autre turbomoteur 2 ou 1 est déclenché par l'activation du dispositif d'assistance pyrotechnique respectif, U2 ou U1, seulement en cas d'échec des moyens classiques de redémarrage. Les conditions de vol sont alors sécurisées par le fonctionnement de l'hélicoptère en bimoteur.

Le vol continu correspond, dans la mission de référence, aux phases de vol de croisière et de recherche à basse altitude. Ces phases sont gérées par le mode M2 qui prévoit le fonctionnement d'un turbomoteur alors que l'autre turbomoteur est en régime de super-ralenti et maintenu en rotation avec sa chambre de combustion allumée.

Cette configuration correspond au besoin en puissance qui, dans ces phases de croisière, est inférieur à la PMC du « gros » moteur 1 et supérieur à celle du « petit » moteur 2. Parallèlement, au regard de la consommation Cs, cette solution est également avantageuse car le gros moteur 1 fonctionne à un niveau de puissance relative plus élevé qu'en mode conventionnel, avec les deux moteurs en fonctionnement. Lorsque les moteurs sont identiques, le besoin de puissance dans ces phases de croisière ne peut excéder la PMC des moteurs.

Dans la phase de recherche C, le « petit » turbomoteur 2 de plus faible puissance fonctionne seul car il est capable de fournir à lui seul le besoin de puissance. En effet, le besoin est alors sensiblement inférieur à la puissance PMC du turbomoteur surdimensionné 1 mais aussi inférieur à la PMC du « petit » moteur 2. Mais surtout, la consommation Cs est plus faible car ce « petit » moteur 2 fonctionne à un niveau de puissance relative plus élevé que celui auquel aurait fonctionné le turbomoteur 2. Dans cette phase C, le turbomoteur 1 est maintenu en régime de super-ralenti, par exemple en rotation par le démarreur utilisé comme moyen d'entraînement E1 à une vitesse d'allumage de chambre préférentielle.

Alternativement, dans le cas de moteurs de même puissance, un seul des deux moteurs fonctionne, l'autre étant maintenu en régime de super-ralenti.

Selon l'invention, le générateur de gaz du turbomoteur en régime de super-ralenti est assisté par l'entraînement mécanique en rotation de son arbre AE, de façon à réduire la température de fonctionnement et la consommation de carburant.

Dans le cas représenté, l'entraînement de l'arbre AE du générateur de gaz 21 est réalisé au moyen de son démarreur (moyen d'entraînement E2) qui est alimenté par le démarreur/générateur (moyen d'entraînement E1) de l'autre générateur de gaz 11. Comme indiqué dans ce qui précède, les moyens d'entraînement E1, E2 sont gérés par les moyens d'activation du système de régulation 4. L'injection d'une puissance mécanique sur l'arbre AE du générateur de gaz 21 diminue le travail mécanique que doit fournir sa turbine TG pour entrainer le compresseur K, ce qui se traduit par une diminution de la température d'entrée de celle-ci ainsi que de la température dans la chambre de combustion CC. La rotation du générateur est entretenue à la fois par l'entraînement mécanique et un débit de carburant d'alimentation de la chambre, ce dernier pouvant être relativement faible par rapport à la technique antérieure, ce qui limite la consommation en carburant.

## Revendications

1. Procédé d'optimisation de la consommation spécifique d'un hélicoptère équipé de deux turbomoteurs (1, 2) comportant chacun un générateur de gaz (11, 21) muni d'une chambre de combustion (CC) et d'une turbine libre (12, 22) apte à entraîner un rotor de l'hélicoptère, chacun de ces turbomoteurs (1,2) étant apte à fonctionner seul en régime de vol continu, l'autre turbomoteur (2, 1) étant alors en régime dit de super-ralenti à puissance nulle apte à passer en mode d'accélération du générateur de gaz de ce turbomoteur (2, 1) par un entraînement compatible avec un redémarrage en sortie d'urgence, la turbine libre (22, 12) dudit turbomoteur (2, 1) en régime de super-ralenti étant désaccouplée du rotor de l'hélicoptère, **caractérisé en ce que** ce régime de super-ralenti est obtenu avec la chambre de combustion (CC) du générateur de gaz allumée, et **en ce que** ce régime de super-ralenti est assisté par un entraînement mécanique en rotation de l'arbre (AE) du générateur de gaz à ce régime, de façon à réduire la température de fonctionnement et la consommation de carburant de ce générateur de gaz.

2. Procédé d'optimisation selon la revendication 1, **caractérisé en ce que** l'assistance est continue sans interruption pendant toute la durée du régime de super-ralenti.

3. Procédé d'optimisation selon la revendication 1 ou 2, **caractérisé en ce que** le régime de super-ralenti correspond à 10 à 40% environ du régime nominal du générateur de gaz à ce régime.

4. Procédé d'optimisation selon l'une des revendications précédentes, **caractérisé en ce que** l'entraînement mécanique est réalisé par un moteur électrique, un dispositif d'entraînement mécanique couplé à l'autre générateur de gaz ou au rotor de l'hélicoptère, ou un dispositif d'entraînement mécanique fonctionnant avec une source d'énergie telle qu'une source hydraulique, ou pneumatique.

## Patentansprüche

1. Verfahren zur Optimierung des spezifischen Verbrauchs eines Hubschraubers mit zwei Turbinentriebwerken (1, 2), die jeweils einen Gasgenerator (11, 21) mit einer Brennkammer (CC) und einer freien Turbine (12, 22) aufweisen, die einen Rotor des Hubschraubers antreiben kann, wobei jedes dieser Turbinentriebwerke (1, 2) allein im Dauerflugbetrieb arbeiten kann, während das andere Turbinentriebwerk (2, 1) dann im sogenannten Superleerlaufbetrieb mit null Leistung läuft, von dem es durch einen Antrieb, der mit einem Not-Wiederanlauf kompatibel ist, in einen Beschleunigungsmodus des Gasgenerators dieses Turbinentriebwerks (2, 1) umschalten kann, wobei die freie Turbine (22, 12) des im Superleerlaufbetrieb laufenden Turbinentriebwerks (2, 1) vom Hubschrauberrotor abgekoppelt ist, **dadurch gekennzeichnet, dass** dieser Superleerlaufbetrieb mit der gezündeten Brennkammer (CC) des Gasgenerators erzielt wird und dass dieser Superleerlaufbetrieb durch einen mechanischen Drehantrieb der Welle (AE) des Gasgenerators bei diesem Betrieb unterstützt wird, um die Betriebstemperatur und den Kraftstoffverbrauch dieses Gasgenerators zu reduzieren.

2. Optimierungsverfahren nach Anspruch 1, **dadurch gekennzeichnet, dass** die Unterstützung während der gesamten Dauer des Superleerlaufbetriebs kontinuierlich ohne Unterbrechung erfolgt.

3. Optimierungsverfahren nach Anspruch 1 oder 2, **dadurch gekennzeichnet, dass** die Drehzahl bei diesem Superleerlaufbetrieb etwa 10 % bis 40 % der Nenndrehzahl des Gasgenerators bei dieser Betriebsart entspricht.

4. Optimierungsverfahren nach einem der vorstehenden Ansprüche, **dadurch gekennzeichnet, dass** der mechanische Antrieb durch einen Elektromotor, eine mechanische Antriebseinrichtung, die mit dem anderen Gasgenerator oder dem Rotor des Hubschraubers gekoppelt ist, oder eine mechanische Antriebsvorrichtung, die mit einer Energiequelle wie einer hydraulischen oder pneumatischen Energiequelle arbeitet, realisiert wird.

## Claims

1. Method for optimising the specific consumption of a helicopter equipped with two turboshaft engines (1, 2) which each comprise a gas generator (11, 21) provided with a combustion chamber (CC) and a free turbine (12, 22) able to drive a rotor of the helicopter, each of these turboshaft engines (1, 2) being capable of operating on its own at a continuous flight speed, the other turboshaft engine (2, 1) therefore being capable of passing, at a speed referred to as super-idle at zero power, into a mode for accelerating the gas generator of this turboshaft engine (2, 1) by means of compatible driving together with a restart in an emergency output, the free turbine (12, 22) of said turboshaft engine (1, 2) at the super-idle speed being uncoupled from the helicopter rotor, **characterised in that** this super-idle speed is obtained while the combustion chamber (CC) of the gas generator is ignited, and **in that** this super-idle speed is assisted by the shaft (AE) of the gas generator being mechanically driven in rotation at this speed, so as to reduce the operating temperature and the fuel consumption of this gas generator.

2. Optimisation method according to claim 1, **characterised in that** the assistance is continued without interruption over the entire duration for which the engine is at super-idle speed.

3. Optimisation method according to either claim 1 or claim 2, **characterised in that** the super-idle speed corresponds to approximately 10 to 40 % of the rated speed of the gas generator at this speed.

4. Optimisation method according to any of the preceding claims, **characterised in that** the mechanical driving is provided by an electric motor, a mechanical drive device that is coupled to the other gas generator or to the rotor of the helicopter, or a mechanical drive device that operates using a power source such as a hydraulic or pneumatic source.
